# EUROPEAN PATENT SPECIFICATION

(11) **EP 0 478 866 B1**
(45) Date of publication and mention of the grant of the patent: **11.09.1996**
(21) Application number: 90560001.1
(22) Date of filing: 05.10.1990
(51) Int. Cl.: G09F 19/02, G09F 19/22, G09F 23/00

(54) **Device for displaying advertisement on conveyors**
Einrichtung zum Zeigen von Werbung auf Förderbändern
Dispositif pour l'affichage de publicité sur les bandes transporteuses

(43) Date of publication of application: 08.04.1992
(73) Proprietor: IAP (INTERNATIONAL AIRPORT PROMOTION) N.V., Willemstad, Curacao (AN)
(72) Inventor: Münkner,Jürgen Richard, E-46023 Valencia (ES)
(74) Representative: Kraag, F., Ir.

(56) References cited:
- EP-A- 0 400 250
- GB-A- 2 044 715
- US-A- 3 849 918
- US-A- 3 881 592
- US-A- 4 333 255

## Description

The invention relates to the field of continuous modular conveyor belts, such as known from US-A-3881592.

Such conveyor belts carry the luggage of air travellers, after their arrival at the airport. Therefore, such conveyor belts are in the centre of attention for members of the public waiting for their suitcases to appear. This moment demands a great deal of attention due to the similarity in shape and colour of the suitcases on the market.

According to the invention, use is made of this attention of the public to present publicity by providing a combination comprising a continuous modular conveyor belt, at least one device for displaying advertisements on the conveyor, according to claim 1.

In EP-A-400250, which is an earlier document falling under Article 54(3) EPC, for Belgium, The Federal Republic of Germany, Italy, Luxemburg and The Netherlands, a combination of this type is described. Separate claims are included for these states.

In the overall conception of the invention, the materials, sizes and shapes, printing, adhesion, settings, cutting process, and perforations, are all selected and designed to assure that the posters: (a) properly meet their advertising displaying objective on any conveyor; (b) set and stay firmly in place, yet are easily removed and replaced; (c) never interfere with the operation and maintenance of conveyors; and, (d) endure the wearing and tearing at baggages and other objects transported on conveyors.

In the following lines it is described the specific adaptation to any type of conveyor under any possible condition. In order to assist the description, two pages of drawings containing seven figures are attached to this application and made part thereof, as examples of the invention.

Case (A): Elongated conveyors with non-overlapping belt-plates on which posters are set in place over sevcral belt-plates. By being elongated (as opposed to circular), these conveyors have straight tracks and curved tracks.

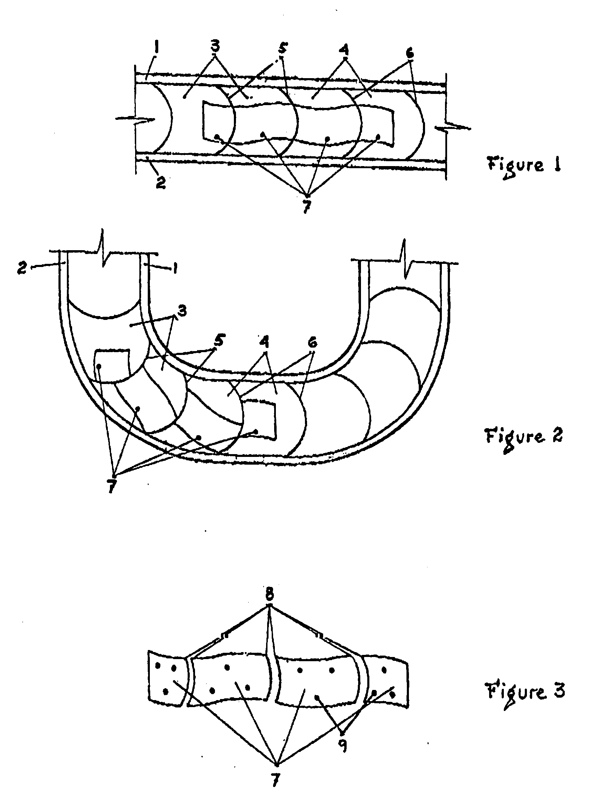

Figure 1 represents a partial view of a straight track, showing: The rails (1, 2) between which the belt-plates (3, 4) run in their transport motion; the contours (5, 6 - arched in this example) of the belt-plates; and one advertising poster (7) set in place over several belt-plates (3, 4,). During the transport motion through straight tracks, all belt-plates keep the same relative position to each other. As a result, all posters (7) are fully readable and composed as originally intended through the straight tracks.

Figure 2 represents a view of a curved track of the same elongated conveyor represented in Figure 1, showing: The rails (1, 2); the same belt-plates (3, 4) turning through the curved track; their contours (5, 6): and the same poster (7). During the transport motion through curved tracks, each belt-plate rotates on itself, changing the relative position to each other.

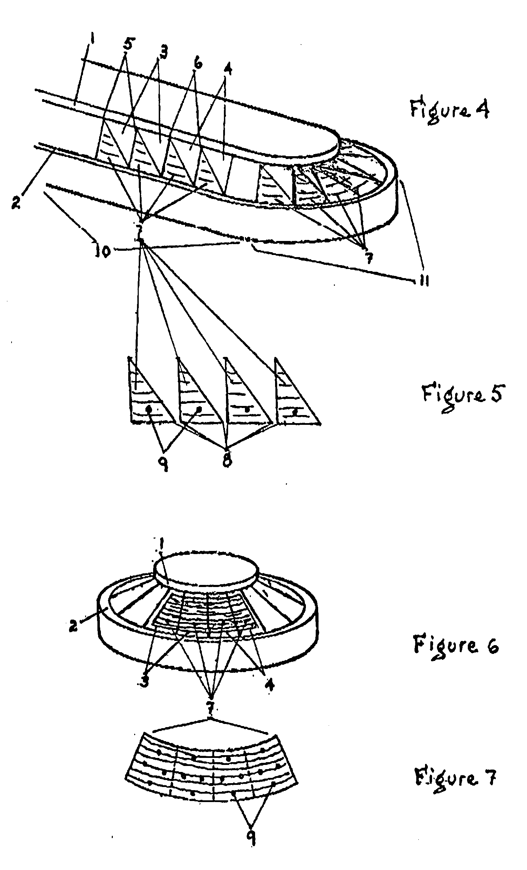

For this reason, each poster (7) set in place over several belt-plates (3, 4) is cut along each belt-plate contour (5, 6) in order to allow for the free rotation play of the belt-plates in their transport motion through curved tracks. This cutting process leaves each poster unit divided in a number of portions (four in this example) which correspond to the same number of belt-plates underneath, as shown in Figure 3. Since there is a small but definite gap between each adjacent belt-plates, two cuts per gap are made (8) and the poster material between cuts is then removed to prevent any interference with the free rotation play of each belt-plate.

Thus, after the cutting process described above, each portion of the poster set in place over its corresponding belt-plate also rotates on itself, changing the relative position to each other, as shown in Figure 2.

As a result, all poster units (7) which were fully readable and composed as originally intended through straight tracks, now breakdown as puzzles through curved tracks (as shown in Figure 2), only to recompose themselves and become fully readable again through the next straight track (as shown in Figure 1).

This puzzle effect can also be accomplished, of course, in reverse. In this case, the posters are set in place at curved tracks as fully readable and composed units to which the cutting process is applied, and then these poster units breakdown as puzzles through straight tracks. The puzzle effect occurs in all elongated conveyors.

Figure 3 represents a poster unit, as mentioned above. It also shows the small perforations (9) sometimes required to provide access to maintenance fasteners on the belt-plates underneath.

As described and shown above, the device, by means of the cutting process, fully meets its advertising displaying objective both through the conveyor's straight and curved tracks. The adaptations to any other type of conveyor are simple modifications or variations, which are part of this patent application, to the basic device as described for case (A).

Case (B): Elongated conveyors with overlapping belt-plates on which posters are set in place over either one or several belt-plates.

The belt-plates in these conveyors partially overlap each other on their transport motion through curved tracks. The overlapping area is always equal and well defined on all belt-plates, and only covers up to a maximum of one-half of their total area, leaving at least another one-half area never overlapped on each belt-plate.

Thus, in this case, posters are designed to display advertisement only on the corresponding areas of the belt-plates which never overlap. They are set in place, and then their blank, unprinted portions are cutoff and removed to prevent any interference with the overlapping action.

Figure 4 represents a partial view of a typical elongated conveyor with overlapping belt-plates, showing: The rails (1, 2); the straight track (10); the curved track (11); the belt-plates (3, 4 - rectangular in this example); the belt-plate contours (5, 6 - straight in this example); the overlapping areas on the belt-plates (3, 4); and two posters (7) with their blank portions removed, as they run through straight and curved tracks.

Figure 5 represents an example of a poster unit adapted to the elongated conveyor with overlapping belt-plates represented in Figure 4, showing: The printed areas (7); the gaps (8); and the maintenance access perforations (9).

Case (C): Any circular conveyor on which posters are set in place over several belt-plates. By being circular, the belt-plates in these conveyors always keep the same relative position to each other, never overlapping in their transport motion through the circular track.

Thus, in this case, posters are simply set in place without applying any cutting process.

Figure 6 represents a view of a typical circular conveyor, showing: The rails (1, 2); the belt-plates (3, 4); and a poster (7).

Figure 7 represents an example of a poster (7) adapted to the circular conveyor represented in Figure 6, showing: Its possible truncated-cone shape to optimally conform the shape of this circular conveyor; the absence of any cuts or gaps, and the maintenance access perforations (9).

After completing above the description of the present invention, the points of protection are expressed in the following

## Claims (Claims for the following Contracting State(s): GB, SE, LI, CH, AT, ES, GR, DK)

1. A combination comprising a continuous modular conveyor belt and at least one device for displaying advertisements on conveyors, whereby the device is a poster unit (7) made of an adhesive sheet comprising more than one section, said section being a poster portion (7), the length of the poster portions (7) together being larger than the maximum longitudinal dimension of one of the belt plates (3, 4) of the conveyor belt on which the device is placed, the device adopting various different positions during the cycle of the conveyor belt, and each poster unit (7) being legible only either in the sections in which the belt adopts an aligned position, or in the sections in which the belt adopts a curved position.

2. A combination according to claim 1, wherein the converyor belt comprises non-overlapping belt plates (3, 4), each poster portion being cut along the contours (5, 6) of the corresponding belt plate (3, 4).

3. A combination according to claim 1, wherein the conveyor belt comprises overlapping belt plates (3, 4).

4. A combination according to claim 3, wherein each poster portion is confined to the non-overlapping belt plate portions.

## Claims (Claims for the following Contracting State(s): BE, DE, IT, LU, NL)

1. A combination comprising a continuous modular conveyor belt and at least one device for displaying advertisements on conveyors, whereby the device is a poster unit (7) made of a synthetic adhesive sheet comprising more than one section, said section being a poster portion (7), the length of the poster portions together being larger than the maximum longitudinal dimension of one of the belt plates (3, 4) of the conveyor belt on which the device (7) is placed, the device adopting various different positions during the cycle of the conveyor belt, and each poster unit (7) being legible only either in the sections in which the belt adopts an aligned position, or in the sections in which the belt adopts a curved position.

2. A combination according to claim 1, wherein each poster portion is confined to the non-overlapping belt plate portions.

## Patentansprüche (Patentansprüche für folgende(n) Vertragsstaat(en): GB, SE, LI, CH, AT, ES, GR, DK)

1. Eine Kombination, enthaltend ein endloses, modulares Transportband und wenigstens eine Einrichtung zum Anzeigen von Werbung auf Transportbändern, wobei die Einrichtung eine Poster-Einheit (7) ist, die aus einer Klebefolie hergestellt ist, die mehr als einen Abschnitt aufweist, der Abschnitt ein Poster-Bereich (7) ist, die Länge der Poster-Bereiche (7) zusammen größer als die maximale Längsabmessung einer der Bandplatten (3, 4) des Transportbandes ist, auf dem die Einrichtung angeordnet ist, die Einrichtung während des Umlaufs des Transportbandes verschiedene unterschiedliche Positionen einnimmt und jede Poster-Einheit (7) nur entweder in den Abschnitten, in denen das Band eine ausgerichtete Position einnimmt, oder in den Bereichen, in denen das Band eine gekrümmte Position einnimmt, lesbar ist.

2. Eine Kombination nach Anspruch 1, wobei das Transportband nicht-überlappende Bandplatten (3, 4) aufweist und jeder Poster-Bereich entlang den Konturen (5, 6) der entsprechenden Bandplatte (3, 4) zugeschnitten ist.

3. Eine Kombination nach Anspruch 1, wobei das Transportband überlappende Bandplatten (3, 4) aufweist.

4. Eine Kombination nach Anspruch 3, wobei jeder Poster-Bereich auf die nicht-überlappenden Bandplattenbereiche beschränkt ist.

## Patentansprüche (Patentansprüche für folgende(n) Vertragsstaat(en): BE, DE, IT, LU, NL)

1. Eine Kombination, enthaltend ein endloses, modulares Transportband und wenigstens eine Einrichtung zum Anzeigen von Werbung auf Transportbändern, wobei die Einrichtung eine Poster-Einheit (7) ist, die aus einer synthetischen Klebefolie hergestellt ist, die mehr als einen Abschnitt aufweist, der Abschnitt ein Poster-Bereich (7) ist, die Länge der Poster-Bereiche (7) zusammen größer als die maximale Längsabmessung einer der Bandplatten (3, 4) des Transportbandes ist, auf dem die Einrichtung angeordnet ist, die Einrichtung während des Umlaufs des Transportbandes verschiedene unterschiedliche Positionen einnimmt und jede Poster-Einheit (7) nur entweder in den Abschnitten, in denen das Band eine ausgerichtete Position einnimmt, oder in den Bereichen, in denen das Band eine gekrümmte Position einnimmt, lesbar ist.

2. Eine Kombination nach Anspruch 1, wobei jeder Poster-Bereich auf die nicht-überlappenden Bandplattenbereiche beschränkt ist.

## Revendications (Revendications pour l'(les) Etat(s) contractant(s) suivant(s): GB, SE, LI, CH, AT, ES, GR, DK)

1. Combinaison comprenant une bande transporteuse modulaire continue et au moins un dispositif pour afficher des publicités sur des moyens transporteurs, dispositif qui consiste en un ensemble formant affiche (7) formé d'une feuille adhésive comprenant plusieurs éléments dont chacun représente une partie d'affiche (7), la longueur totale des parties d'affiche (7) étant supérieure à la dimension longitudinale maximale de l'une des plaques (3, 4) de la bande transporteuse sur laquelle le dispositif est placé, le dispositif adoptant diverses positions différentes au cours du cycle de la bande transporteuse, et chaque ensemble formant affiche (7) étant lisible uniquement dans les portions dans lesquelles la bande adopte une position alignée ou dans les portions dans lesquelles la bande adopte une position courbée.

2. Combinaison selon la revendication 1, dans laquelle la bande transporteuse comprend des plaques de bande (3, 4) non chevauchantes, chaque partie d'affiche tant découpée suivant les contour, (5, 6) de la plaque de bande (3, 4) correspondante.

3. Combinaison selon la revendication 1, dans laquelle la bande transporteuse comprend des plaques de bande (3, 4) chevauchantes.

4. Combinaison selon la revendication 3, dans laquelle chaque partie d'affiche est limitée aux parties de plaques de bande non chevauchantes.

## Revendications (Revendications pour l'(les) Etat(s) contractant(s) suivant(s): BE, DE, IT, LU, NL)

1. Combinaison comprenant une bande transporteuse modulaire continue et au moins un dispositif pour afficher des publicités sur des moyens transporteurs, dispositif qui consiste en un ensemble formant affiche (7) formé d'une feuille adhésive synthétique comprenant plusieurs éléments dont chacun représente une partie d'affiche (7), la longueur totale des parties d'affiche étant supérieure à la dimension longitudinale maximale de l'une des plaques (3, 4) de la bande transporteuse sur laquelle le dispositif (7) est placé, le dispositif adoptant diverses positions différentes au cours du cycle de la bande transporteuse, et chaque ensemble formant affiche (7) étant lisible uniquement dans les portions dans lesquelles la bande adopte une position alignée ou dans les portions dans lesquelles la bande adopte une position courbée.

2. Combinaison selon la revendication 1, dans laquelle chaque partie d'affiche est limitée aux parties de plaques de bande non chevauchantes.
